# EUROPEAN PATENT APPLICATION

(11) **EP 1 457 463 A1**
(43) Date of publication of application: **15.09.2004**
(21) Application number: 02748877.4
(22) Date of filing: 09.07.2002
(51) Int. Cl.: C02F 3/34

(54) **METHOD OF BREAKING DOWN ORGANIC COMPOUNDS PRESENT IN INDUSTRIAL EFFLUENTS USING ENZYMATIC REACTORS AND THE APPLICATION THEREOF IN THE DISCOLORATION OF INDUSTRIAL DYES**

(30) Priority: 17.07.2001 ES 200101670
(71) Applicant: UNIVERSIDADE DE SANTIAGO DE COMPOSTELA, 15782 Santiago de Compostela (ES)
(72) Inventor: FEIJOO COSTA, G., Uni. De Santiago de Compestela, Tecnol., 15782 Santiago de Compostela (ES); LEMA RODICIO, J.M., Uni. De Santiago de Compostela, Tecnol., 15782 Santiago de Compostela (ES); MOREIRA VILAR, M.T., Uni De Santiago de Compostela, Technol., 15782 Santiago de Compostela (ES); MIELGO IZA, I., Uni. De Santiago De Compostela, Tecnol., 15782 Santiago de Compostela (ES); LOPEZ DIAZ, C., Uni. De Santiago De Compostela, Tecnol., 15782 Santiago de Compostela (ES)
(74) Representative: Davila Baz, Angel
(86) International application number: PCT/ES2002/000343
(87) International publication number: WO 2003/008345

(57) **Abstract**

The invention relates to a method of breaking down organic compounds present in industrial effluents using enzymatic reactors. Said invention also relates to the application thereof in the discoloration of industrial dyes using manganese peroxidase which is free or immobilised in enzymatic reactors operating in a discontinuous, semi-continuous or continuous manner. The inventive method is based on an operating strategy which allows for regulation of the speed at which the following are added: the Mn⁺² ion, hydrogen peroxide and chelating agents such as open-chain dicarboxylic organic acids and acetic acid.

## Description

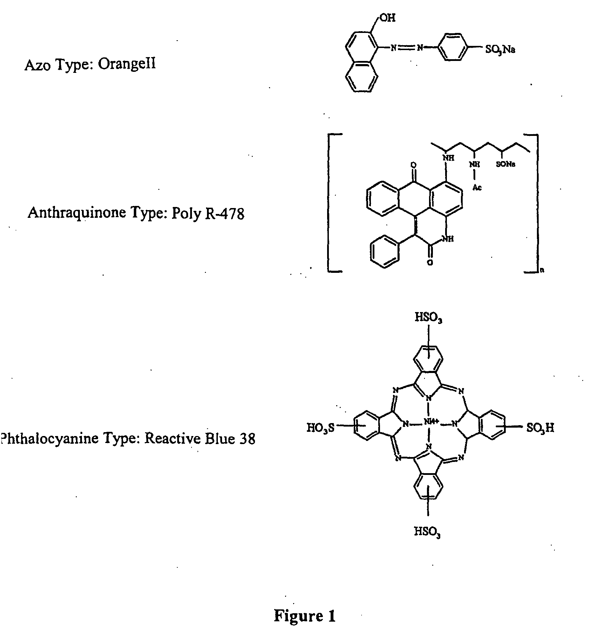

Many synthetic organic dyes are used in textile, cosmetic, paper, food or pharmaceutical industrial processes. Dyes are classified in three main groups according to the chemical structure of their chromophoric groups (Figure 1): a) azo type, the most extended group (for example, Congo Red, Orange II); b) anthraquinone and anthrapyridone type (Poly R-478 and Poly B-411, respectively); and, c) phthalocyanine type (for example, Reactive Blue 38) (Zollinger, H. 1987. Colour Chemistry: Syntheses, Properties and Applications of Organic Dyes and Pigments. VCH Publishers, Weinheim).

Removal of colour from the effluents generated in these processes is an especially important environmental problem. Although physicochemical treatments such as coagulation-sedimentation, adsorption, ozone or chlorine oxidation, ionic exchange in synthetic resins, inverse osmosis, etc., may be applied in order to remove colour, all these processes have different disadvantages, such as high operation costs and limited applicability (Dubrow, S.F. *et al*., 1996. in: Environmental Chemistry of Dyes and Pigments. John Wiley&Sons, New York, pp. 75-94). Although, the conventional biological (aerobic-anaerobic) treatment processes have been successfully applied in the treatment and detoxification of many industrial effluents, they are relatively ineffective for their decolourization (Banat, I.M. *et al*. 1996. Bioresource Technol. 58:217-227; Delée, W. *et al*. 1998. J. Chem. Technol. Biotechnol. 73:323-335).

A feasible biotechnological alternative for the treatment of these effluents is the use of the white-rot basidiomycete fungi, which are characterised by the syntheses of an extracellular enzymatic complex (mainly peroxidases and oxidases) which is even capable of oxidising polymers as complex and irregular as lignin. This characteristic has allowed its successful application in processes such as the degradation of high molecular weight xenobiotic organic compounds like polyphenols and polyaromatics (Field, J.A. *et al*., 1993. Trends Biotechnol. 11:44-49), the decolourization of industrial effluents (Banat, I.M. *et al*., 1996. Bioresource Technol. 58:217-227) and the biobleaching of paper pulp (Moreira, M.T. *et al*., 1997. J. Biotechnol. 53:237-251). Different patents have been published where the possible utility of white-rot fungi (Paszczynski, A. *et al*., 1997. US005618726A), as well as their extracellular enzymes (Barfoed, M y Kirk, O. 1996. US6036729; Rochefort, D. *et al*., 1999. WO9954545), for azo dyes treatment is described.

Among the different enzymes that constitute the oxidative extracellular enzymatic complex of the white-rot fungi, manganese peroxidase (MnP) plays a relevant role in the above mentioned processes. The main function of MnP is the oxidation of Mn⁺² to Mn⁺³, for which the presence of H₂O₂ as oxidant is necessary (Kuan, I.C. *et al*., 1993. J. Biol. Chem. 268:20064-20070). The Mn⁺³ ion, which is stabilised in the presence of dicarboxylic acids, has a high redox potential, allowing the oxidation of a great variety of xenobiotic compounds with complex structures (Field, J.A. *et al*., 1993. Trends Biotechnol. 11:44-49). Due to the difficulty of establishing a suitable operational strategy which accurately defines the rate of addition of the cofactors or cosubstrates required for the catalytic cycle, a methodology for the degradation of compounds using free and/or immobilised MnP in reactors has not yet been described. Special attention has to be paid to the control of the dosage rate of hydrogen peroxide, which produces a remarkable deactivation of MnP at excessive H₂O₂ concentrations.

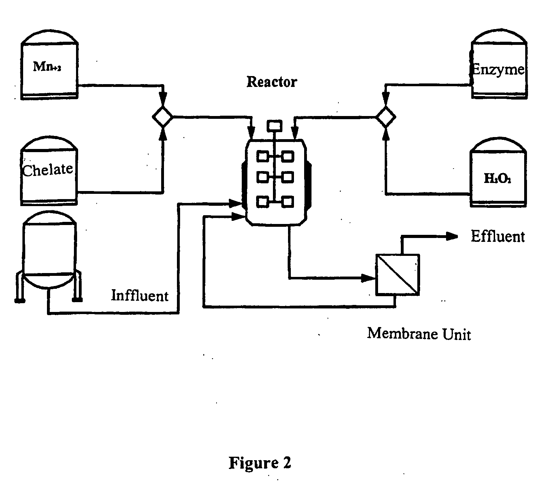

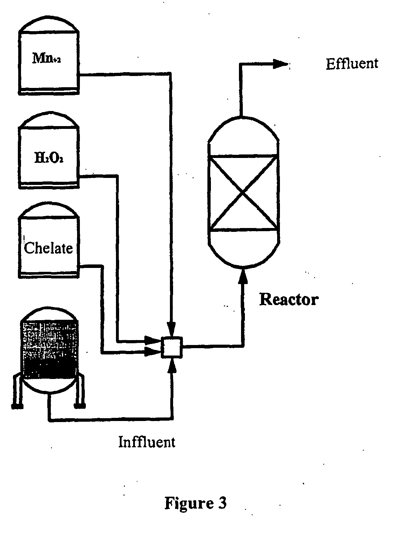

The present invention refers to a procedure that allows the decolourization and degradation of xenobiotic compounds by means of MnP in systems with free or immobilised enzymes operating in batch, semicontinuous or continuous enzymatic reactors. In addition to stirred batch reactors, this technology could be implemented in reactors coupled to membrane units (ultrafiltration, nanofiltration and microfiltration) which would allow the recirculation of the enzyme. Figure 2 schematically represents the configuration of this type of reactors, pointing out the components which must be fed to the reactor for the proper operation of the system. This procedure can be also applied to fixed bed, fluidised bed and airlift reactors, with enzymes immobilised on different supports. Figure 3 represents the flow sheet of an immobilised enzyme reactor.

The procedure consists of different steps which are established below:

The use of free or immobilised MnP in reactors with and without agitation is proposed. The enzyme addition rate into the reactor must maintain an enzymatic concentration between 50 and 500 U L⁻¹. Temperature and pH in the reactor must be controlled to values comprised between 10-50°C and 4-8, respectively. In order to stabilise and optimise the MnP catalytic action, it is necessary to add chelating agents such as acetic acid or open-chain dicarboxylic organic acids (for example, oxalic or glycolic acid) until organic acid concentrations between 0.05 and 10 mM are reached. The organic compound load to be degraded in the reactor, must be established so as to set a maximum concentration of 1 g L⁻¹.

Another characteristic of the procedure is based on the adaptation of the addition rate of the substrates implicated in the catalytic cycle of MnP: H₂O₂ and Mn⁺². Due to the effect that a high concentration of H₂O₂ has on the enzymatic deactivation, its addition rate must be maintained between 5 and 100 µmol L⁻¹ min⁻¹. Mn⁺² ion must be maintained between 0.2 and 2 µmol L⁻¹ min⁻¹.

### EXAMPLE 1

Phthalocyanine dye decolourization (Reactive Blue 38) by manganese peroxidase inside stirred tank reactors, operated in batch.

The previously described procedure was applied for the decolourization of Reactive Blue 38 by manganese peroxidase (MnP) in a stirred tank reactor with a useful volume of 200 mL. The initial dye and enzyme load was 0.1 g L⁻¹ and 200 U L⁻¹, respectively. 1mM of sodium acetate was added as the chelating agent at pH 4,5. Mn⁺² concentration was 33 µM and the H₂O₂ addition rate was 65 µmol L⁻¹ min⁻¹.

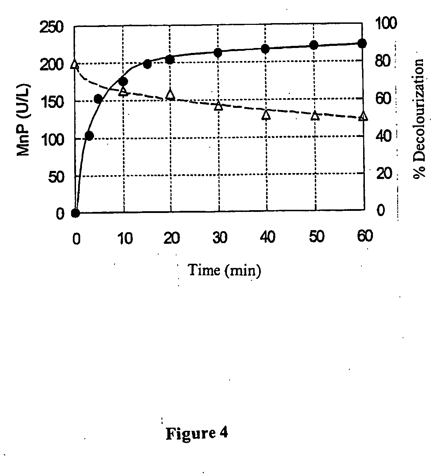

Figure 4 shows the decolourization percentage (•) of the dye Reactive Blue 38 and the enzymatic activity profile (Δ) during a one hour incubation. The decolourization was determined by means of the absorbance measurements of the effluent at 610 nm. Results show that the decolourization percentage was higher than 80% after an operation time of 20 min, being the maximum value 90% for a hydraulic retention time of one hour.

### EXAMPLE 2

Decolourization of the Orange II (azo type) dye, by manganese peroxidase inside an enzymatic stirred tank reactor, operated in continuos flow.

In this second example the procedure was applied to the decolourization of Orange II (azo type dye) with free MnP in a stirred tank reactor with a useful volume of 250 mL coupled to an ultrafiltration membrane system (Prep./Scale™-TFF Millipore) with a membrane with a porous size of 10 kDa in order to retain the enzyme and recirculate it to the reactor (Figure 2). The addition rates (µmol L⁻¹ h⁻¹) of each compound/substrate were as follows: Orange II, 17,850; Acetic acid, 625; Mn⁺², 33 and H₂O₂, 55. The feeding rate of MnP was maintained at 25 U L⁻¹ h⁻¹. The operation conditions were the following: temperature, 20°C; pH, 4.5; hydraulic retention time, 1 h; recirculation ratio (recirculation/feed rate), 1:5.

Orange II degradation was determined by high performance liquid chromatography (Hewlett Packard ChemStation Chromatograph, Spain) coupled to a diode array detector HP1090M Series II, with a Spherisorb ODS2 column (200 for 4.6-mm; packed of 5 µm) (Phase Separations Ltd. Deeside, UK), by monitoring the absorbance at 480 and 210 nm. The effluent used was a mixture of acetonitrile-water (90%-10%) at a flow rate of 0.8 mL min⁻¹ and 35°C.

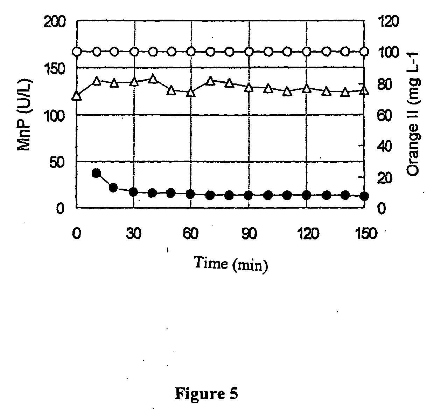

Figure 5 represents the Orange II concentration of the inlet (○) and outlet (●) of the reactor, and the enzymatic activity (Δ). Results obtained point out the high effectiveness of Orange II degradation, between 90 and 95%. These values correspond to an almost transparent effluent vs. a strongly orange coloured influent.

## Claims

1. Degradation procedure of organic compounds present in industrial effluents by means of enzymatic reactors and its application in the decolourization of industrial dyes, **characterised by** the use of manganese peroxidase, hydrogen peroxide, chelating agents, manganese⁺², in batch, semicontinuous and continuous reactors.

2. Procedure according to claim 1, **characterised by** a manganese peroxidase addition rate such that the concentration in the reactor is comprised between 50 and 500 U L⁻¹.

3. Procedure according to claims 1 and 2, **characterised by** the application of free or immobilised enzyme; the free enzyme in a membrane reactor with recirculation; and the application of the immobilised enzyme in a fixed bed, fluidised bed or airlift reactor.

4. Procedure according to claim 1, **characterised by** the continuous or semicontinuous addition of hydrogen peroxide to the reactor, with rates comprised between 5 and 100 µmol L⁻¹ min⁻¹.

5. Procedure according to claim 1, **characterised by** the addition of chelating agents to the reactor, such as acetic acid or open-chain dicarboxylic organic acids, with such a chelating agent addition rate such that the concentration in the reactor is comprised between 0.05 and 10 mM.

6. Procedure according to claim 1, **characterised by** the application of a Mn⁺² addition rate between 0.2 and 2 µmol L⁻¹ min⁻¹.

7. Procedure according to all the previous claims, **characterised by** the operation of the degradation system at a temperature between 10 and 50°C and with an operation pH values between 4 and 8.
